(19) Europäisches Patentamt
European Patent Office
Office européen des brevets

(11) **EP 1 748 372 A2**

(12) **EUROPEAN PATENT APPLICATION**

(43) Date of publication:
**31.01.2007 Bulletin 2007/05**

(51) Int Cl.:
*G06F 17/50* (2006.01)    *G06T 17/40* (2006.01)

(21) Application number: **06253872.3**

(22) Date of filing: **24.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.07.2005 US 161243**

(71) Applicant: **General Electric Company**
**Schenectady, NY 12345 (US)**

(72) Inventor: **Ingram, Clint Luigie**
**Fountain Inn, South Carolina 29644 (US)**

(74) Representative: **Bedford, Grant Richard et al**
**London Patent Operation**
**GE International Inc**
**15 John Adam Street**
**London WC2N 6LU (GB)**

(54) **System and method for aligning three-dimensional models**

(57) A method of aligning three-dimensional models (10) including: receiving one or more point clouds (12) each indicative of a three-dimensional model (10); sampling a representative data set (14) from the point clouds (12); solving for a set of possible local alignment error minima (16) of the representative data sets (14); selecting a representative minimum (18) from the set of possible local minima (16); and solving for a global minima (20) in alignment of the point clouds (12) using the representative minima (18) as an initial estimate.

# FIG. 1

**Description**

The present disclosure relates generally to a system and method of aligning three-dimensional models. More specifically the present disclosure relates to aligning three-dimensional aeromechanical and heat transfer computational models and interpolating data between the models.

Designers are becoming more involved in heat transfer and aeromechanical airfoil design to create more robust and reliable hardware. This type of modeling requires the use of both three-dimensional structural software and three-dimensional computational fluids software. Additionally, this type of modeling requires passing boundary conditions from the three-dimensional structural software to the three-dimensional computational fluids software, and vice versa. Currently, this process is accomplished by using software to interpolate the boundary conditions from one model to the other. A designer, using the current practice for aero-mechanics and heat transfer modeling, must manually align the two three-dimensional models and use software to interpolate the three-dimensional data from one model to the other.

A software package called SIESTA is commonly used to do the interpolation of data from one three-dimensional model to another for both heat transfer and aeromechanical analyses. However, the alignment element of the process must be manually input into SIESTA, which introduces a non-repeatable step in to the design process. Since the heat transfer and aeromechanical analyses can be sensitive to the model alignment, this non-repeatable element becomes an unacceptable source of variance and error.

Imaging applications have been successfully utilizing computer algorithms, such as the ICP (Iterative Closest Point) algorithm, to digitally align three-dimensional models. The ICP algorithm is a mathematical model that guarantees monotonic convergence to a local minimum of the alignment error between two "point clouds". These "point clouds" represent the geometric data of the models. One limitation of the ICP algorithm is that it may return one of many local minima in alignment error and not the global minimum alignment error, representative of the best alignment. Many research papers exist on methods to assist in finding the global minimum in the imaging field. However, no previous work has been done on applying the ICP algorithm to aeromechanical and heat transfer computational modeling. Therefore, no concepts exist for how to find the global minimum to such an alignment problem.

Disclosed herein is a method of aligning three-dimensional models including: receiving one or more point clouds each indicative of a three-dimensional model; sampling a representative data set from the point clouds; solving for a set of possible local alignment error minima of the representative data sets; selecting a representative minimum from the set of possible local minima; and solving for a global minima in alignment of the point clouds using the representative minima as an initial estimate.

Also disclosed herein is a system for aligning three-dimensional models including: means for receiving one or more point clouds indicative of a three-dimensional model; means for sampling a representative data set from the point clouds; means for solving for a set of possible local alignment error minima of said representative data sets; means for selecting a representative minima from the set of possible local minima; and means for solving for a global minima in alignment of the point clouds using the representative minima as an initial estimate.

Further disclosed herein is a computer program product for aligning three-dimensional models, the computer program product including instructions for performing: receiving one or more point clouds each indicative of a three-dimensional model; sampling a representative data set from the point clouds; solving for a set of possible local alignment error minima of the representative data sets; selecting a representative minimum from the set of possible local minima; and solving for a global minimum in alignment error of the point clouds using the representative minimum as an initial estimate.

Other systems, methods, and/or computer program products according to exemplary embodiments will be or become apparent to one with skill in the art upon review of the following drawings and detailed description. It is intended that all such additional systems, methods, and/or computer program products be included within this description, be within the scope of the present disclosure, and be protected by the accompanying claims.

Referring to the exemplary drawings wherein like elements are numbered alike in the accompanying Figures:

Figure 1 depicts a block diagram of an exemplary embodiment of a method for aligning three-dimensional models; and

Figure 2 depicts a flow chart of an exemplary embodiment of a model alignment through rigid-body interactive coordinate superimposition algorithm 100.

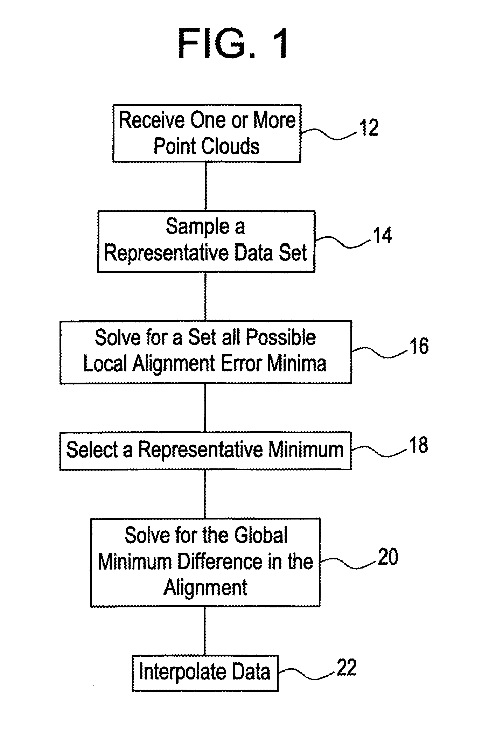

A block diagram of one embodiment of a method for aligning three-dimensional models 10 is depicted in Figure 1. At process block 12 the method for aligning three-dimensional models 10 receives one or more point clouds, which are each representative of a three-dimensional model. Then the method for aligning three-dimensional models 10 samples a representative data set from each point cloud; the representative data set is selected to ensure the general geometry of the three-dimensional model is maintained by the representative data set, this is shown at process block 14. After sampling a representative data set, the method for aligning three-dimensional models 10 solves for a set of all possible local alignment error minima, shown at process block 16. Then at process block 18, a representative minimum is selected, which is the smallest of the set of all possible local alignment error minima. At process block 20, the method for aligning three-dimensional models 10 solves for the global minimum difference in the alignment of the point clouds by applying either the TrICP (Trimmed Iterative Closest Point) or the ICP algorithm to the point clouds and using the representative minimum as an initial estimate. Optionally, as shown at process block 22, the method for aligning three-dimensional models 10 interpolates the data from one three-dimensional model to another after calculating the best alignment of the models, represented by the global minimum has been calculated.

In an exemplary embodiment, the method for aligning three-dimensional models 10 utilizes the TrICP or ICP algorithm to calculate a local alignment error minimum for each of multiple possible alignments resulting in the set of all possible local alignment error minima being generated. Due to some limitations inherent with the TrICP and the ICP algorithms a local alignment error minimum can only be guaranteed to be a minimum for a limited range of alignments. To account for this limitation, the method for aligning three-dimensional models 10 calculates all possible local alignment error minimums for a set of alignments, which ensures all possible alignments are covered. For example, many TrICP algorithms can only ensure a minimum for a twenty-degree spread, therefore when applying this algorithm to three-dimensional space a set of 312 possible alignments is used to ensure that all possible alignments are included.

The TrICP and ICP algorithms as used in the above method reduce the alignment problem to a minimization problem with the error in the alignment between the models being minimized. Alone, neither the TrICP nor ICP algorithm guarantee that a global minimum solution will be generated, so other strategies to find the global minimum must be used in conjunction with the algorithms. Accordingly, a model alignment through rigid-body interactive coordinate superimposition (MATRICS) algorithm that incorporates the TrICP algorithm and other strategies to find the best numerical alignment between the three-dimensional models has been developed.

As discussed above, the ICP and TrICP algorithms require that the initial estimate be within 20 degrees rotation from the global minimum to ensure that the best alignment is determined. Since the global minimum is unknown, the ICP and TrICP algorithms require some other feature to be added to ensure that the global minimum, and not a local minimum, is determined. This "20 degree" requirement, applied to three-dimensional models, implies that there are 312 possible local minima to the minimization problem. Accordingly, MATRICS solves for all 312 possible initial estimates on a sampled set of models. The initial estimate corresponding to the smallest local minimum and the corresponding local minimum are then used on the original set of three-dimensional models for final alignment. The TrICP algorithm is then applied to the original point clouds to create the numerically best alignment between the three-dimensional models.

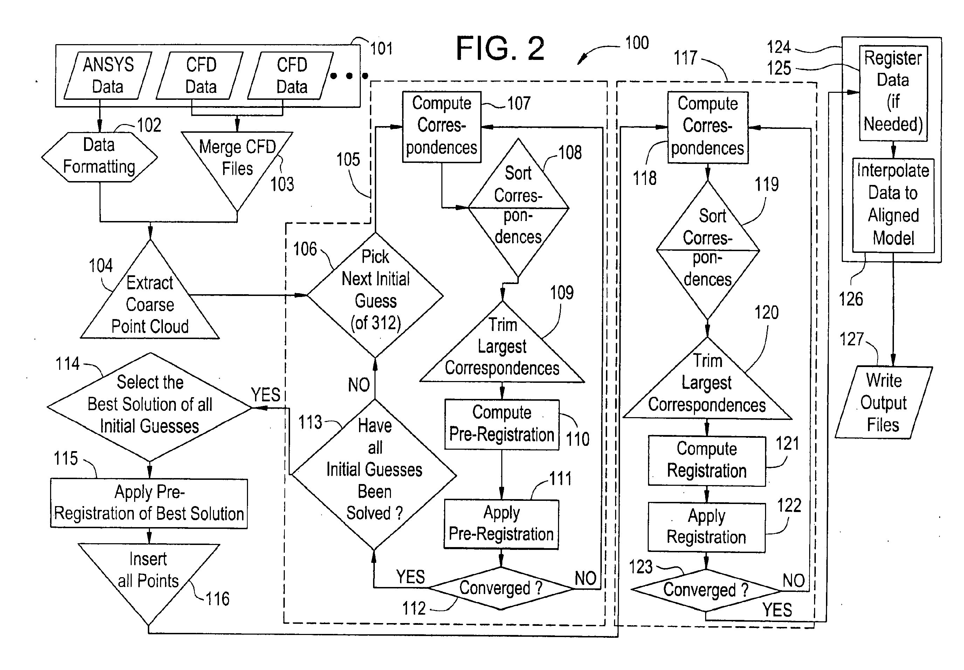

Turning now to Figure 2, a flow chart of an exemplary embodiment of a MATRICS algorithm 100 is depicted. The MATRICS algorithm 100 receives input from one or more sources such as ANSYS or CFD software as shown at process block 101. After receiving the input, the MATRICS algorithm 100 formats the data received, shown at process block 102, and merges data to form point clouds indicative of complete three-dimensional models, shown at process block 103. Once the date has been input and properly formatted, the MATRICS algorithm 100 extracts a coarse point cloud by sampling a representative data set from the point clouds, as shown at process block 104. After the representative data set has been determined the MATRICS algorithm 100 enters an iterative pre-registration phase that is shown generally as process block 105.

The pre-registration phase includes selecting an initial estimate from the set of 312 possible initial alignments, shown at process block 106. For each of the possible initial alignments the MATRICS algorithm 100 computes the correspondences between the points of the two point clouds, shown at process block 107, sorts the correspondences, shown at process block 108, and trims the largest correspondences, shown at process block 109. The MATRICS algorithm 100 computes a pre-registration vector that includes a translation vector and a rotation vector, shown at process block 110, and applies the pre-registration vector to the representative data set, shown at process block 111. After applying the pre-registration vector the MATRICS algorithm 100 determines if a local minimum in alignment error between the representative data sets has been found, using either the TrICP or ICP algorithm, if so the MATRICS algorithm 100 proceeds to process block 113, otherwise the process iterates by returning to computing the correspondences between the points of the representative data sets, shown at process block 107. At process block 113, the MATRICS algorithm 100 determines if the local minimum for all possible initial alignments has been solved if so then the MATRICS algorithm 100 proceeds to process block 114, otherwise the process iterates by returning selecting another initial alignment estimate at process block 106.

Once the local minimum for all possible initial alignments has been solved, the MATRICS algorithm 100 selects the best alignment solution, the representative minimum, as shown at process block 114. At process block 115, the MATRICS algorithm 100 applies the pre-registration vector corresponding to the best alignment solution to the representative data sets. After applying the pre-registration vector to the representative data sets the MATRICS algorithm 100 inserts all of the data points from the original point clouds back into the three-dimensional models. Once all of the data points have been inserted into the three-dimensional models and the pre-registration vector has been applied the MATRICS algorithm 100 enters the registration phase, shown generally as process block 117.

The registration phase 117 of the MATRICS algorithm 100 computes the correspondences between the points of the two point clouds, shown at process block 118, sorts the correspondences, shown at process block 119, and trims the largest correspondences, shown at process block 120. The MATRICS algorithm 100 computes the registration vector that includes a translation vector and a rotation vector, shown at process block 121, and applies the registration vector to the point clouds, shown at process block 122. As shown at process block 123, after applying the registration vector to the point clouds the MATRICS algorithm 100 determines if the best possible alignment of the point clouds has been determined, using either the TrICP or ICP algorithm, if so the process proceeds to process block 124, otherwise the process iterates by returning to process block 118 and again calculating the correspondences between the point clouds.

After the best possible alignment and registration vector have been determined the MATRICS algorithm 100 proceeds to the interpolation phase, shown generally as process block 124. The interpolation phase includes registering the data corresponding to the three-dimensional models, shown as process block 125, and interpolating the data from one three-dimensional model to another, shown as process block 126. Finally, after the data has been interpolated from one three-dimensional model to the other the MATRICS algorithm 100 writes an output data file, as shown at process block 127.

The MATRICS algorithm 100, in addition to ICP or TrICP, includes the following capabilities: filtering out all extraneous nodes and elements from the models; allowing a designer to bring in "shell" elements or "load" elements from ANSYS; allowing a designer to bring in any number of UIF files from CFD; allowing a designer to bring in triangular, quadrilateral, or a mixture of elements from ANSYS or CFD; the ability to do bi-linear interpolation for quadrilateral elements and linear interpolation for triangular elements; the ability to write out UIF (for post-processing). UOF (for CFD), and load (for ANSYS) files. Additionally, the MATRICS algorithm 100 samples the three-dimensional models, using a specially devised scheme that maintains the overall geometry of the three-dimensional model.

In an exemplary embodiment, the MATRICS algorithm 100 represents each point in the point cloud as a Cartesian vector such as $\vec{m_j} = \left(x_j, y_j, z_j\right)$ & $\vec{s_i} = \left(x_i, y_i, z_i\right)$ where mi and $s_i$ represent points in two separate point clouds. The Euclidean distance between the two points $m_i$ and $s_i$ is defined as

$$\left\|\vec{m_i} - \vec{s_j}\right\| = \sqrt{\left(x_i - x_j\right)^2 + \left(y_i - y_j\right)^2 + \left(z_i - z_j\right)^2}$$

The MATRICS algorithm 100 uses the Euclidean distance to find the closest corresponding point between the point clouds and uses this information to calculate a registration vector, which includes a translation vector and a rotation vector. The translation vector is used to translate a point cloud and the rotation vector is used to rotate a point cloud. The registration vectors and the corresponding unit rotation matrix are defined as follows:

$$\vec{q_T} = \begin{bmatrix} q_4 \\ q_5 \\ q_6 \end{bmatrix} \quad \vec{q_R} = \begin{bmatrix} q_0 \\ q_1 \\ q_2 \\ q_3 \end{bmatrix} \quad R = \begin{bmatrix} q_0^2 + q_1^2 - q_2^2 - q_3^2 & 2\left(q_1 q_2 - q_0 q_3\right) & 2\left(q_1 q_3 + q_0 q_2\right) \\ 2\left(q_1 q_2 + q_0 q_3\right) & q_0^2 + q_2^2 - q_1^2 - q_3^2 & 2\left(q_2 q_3 - q_0 q_1\right) \\ 2\left(q_1 q_3 - q_0 q_2\right) & 2\left(q_2 q_3 + q_0 q_1\right) & q_0^2 + q_3^2 - q_1^2 - q_2^2 \end{bmatrix}$$

The function that the MATRICS algorithm 100 uses to minimize the alignment error and compute the registration is: $f\left(\vec{q}\right) = \frac{1}{N_s} \sum_{i=1}^{N_s} \left\|\vec{m_i} - R\left(\vec{q_R}\right)\vec{s_i} - \vec{q_T}\right\|^2$ Where the optimal translation vector is $\vec{q_T} = \vec{\mu_m} - R\left(\vec{q_R}\right)\vec{\mu_s}$ and the optimal rotation vector is the unit eigenvector $\vec{q_R}$ which corresponds to the maximum eigenvalue of the following matrix:

$$Q\left(\sum\nolimits_{ms}\right) = \begin{bmatrix} tr\left(\sum\nolimits_{ms}\right) & \Delta^T \\ \Delta & \sum\nolimits_{ms} + \sum\nolimits_{ms}^T - tr\left(\sum\nolimits_{ms}\right)I_3 \end{bmatrix} \quad \text{where} \quad \vec{\mu_m} = \frac{1}{N_m} \sum_{i=1}^{N_m} \vec{m_i} \quad ,$$

$$\vec{\mu}_s = \frac{1}{N_m} \sum_{i=1}^{N_m} \vec{s}_i \quad , \quad \sum_{ms} = \frac{1}{N_s} \sum_{i=1}^{N_s} \left[ \vec{s}_i \vec{m}_i^t \right] - \vec{\mu}_s \vec{\mu}_m^t \quad , \quad A_{ij} = \left( \sum_{ms} - \sum_{ms}^T \right)_{ij} \text{, and} \quad \Delta = \begin{bmatrix} A_{23} \\ A_{31} \\ A_{12} \end{bmatrix}.$$

The MATRICS algorithm 100 also includes the functionality to interpolate data from one three-dimensional model to another. For example, in the case of heat transfer analyses, the MATRICS algorithm 100 is run two times in the loop. It is used to align the ANSYS model to the CFD model and interpolate temperatures from the ANSYS model to the CFD model. It is also used to align CFD model to the ANSYS model and interpolate the Heat Transfer Coefficient and pressures from the CFD model to the ANSYS model. Likewise, in the case of aero-mechanical analyses, the MATRICS algorithm 100 aligns the ANSYS model to the CFD model and interpolates the modal displacements from the ANSYS model to the CFD model.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

Parts List

| | |
|---|---|
| Three-dimensional models | 10 |
| Receive point clouds | 12 |
| Sample representative data set | 14 |
| Solve for local alignment error minima | 16 |
| Select representative minimum | 18 |
| Solve for global minimum | 20 |
| Interpolate data | 22 |
| MATRICS algorithm | 100 |
| Receive input | 101 |
| Data formatting | 102 |
| Merge CFD files | 103 |
| Extract point cloud | 104 |
| Pre-registration phase | 105 |
| Pick next guess | 106 |
| Compute correspondences | 107 |
| Sort correspondences | 108 |
| Trim largest correspondences | 109 |
| Apply pre-registration | 111 |
| Initial guesses solved | 113 |
| Select best solution | 114 |
| Apply pre-registration best solution | 115 |
| Registration phase | 117 |
| Compute correspondences | 118 |
| Sort correspondences | 119 |
| Trim largest correspondences | 120 |
| Compute registration | 121 |

(continued)

| Apply registration | 122 |
| --- | --- |
| Converge | 123 |
| Interpolation phase | 124 |
| Register data | 125 |
| Interpolate data | 126 |
| Output files | 127 |

**Claims**

1. A method of aligning three-dimensional models (10) comprises
receiving one or more point clouds (12) each indicative of a three-dimensional model (10);
sampling a representative data set (14) from said point clouds (12);
solving for a set of possible local alignment error minima (16) of said representative data sets (14);
selecting a representative minimum (18) from said set of possible local minima (16); and
solving for a global minimum (20) in alignment error of said point clouds (12) using said representative minimum (18) as an initial estimate.

2. The method of claim 1 further comprising interpolating a first data set (22) from a first three-dimensional model (10) to a second three-dimensional model (10).

3. The method of claim 1 or claim 2 wherein said solving for a set of possible local alignment error minima (16) uses at a TrICP or ICP algorithm (107).

4. The method of claim 2 or claim 3 when dependent thereon further comprising writing an output file including the interpolated data (22).

5. A system for aligning three-dimensional models (10) comprising:

   means for receiving one or more point clouds (12) indicative of a three-dimensional model (10);
   means for sampling a representative data set (14) from said point clouds (12);
   means for solving for a set of possible local alignment error minima (16) of said representative data sets (14);
   means for selecting a representative minima (16) from said set of possible local minima (16); and
   means for solving for a global minima (16) in alignment of said point clouds (12) using said representative minima (16) as an initial estimate.

6. The system of claim 5 further comprising interpolating a first data set (22) from a first three-dimensional model (10) to a second three-dimensional model (10).

7. The system of claim 5 or claim 6 wherein said means solving for a set of possible local alignment error minima (16) uses at a TrICP or ICP algorithm (107).

8. A computer program product for aligning three-dimensional models (10), the computer program product comprising instructions for performing:

   receiving one or more point clouds (12) each indicative of a three-dimensional model (10);
   sampling a representative data set (14) from said point clouds (12);
   solving for a set of possible local alignment error minima (16) of said representative data sets (14);
   selecting a representative minimum (18) from said set of possible local minima (16); and
   solving for a global minimum (20) in alignment error of said point clouds (12) using said representative minimum as an initial estimate.

9. The computer program product of claim 8 further comprising instructions for performing interpolation (124) of a first data set (126) from a first three-dimensional model (10) to a second three-dimensional model (10).

**10.** The computer program product of claim 8 or claim 9 wherein said point clouds (12) each indicative of a three-dimensional model (10) are received from a ANSYS or a CFD software (101).

# FIG. 1

Receive One or More Point Clouds —12

Sample a Representative Data Set —14

Solve for a Set all Possible Local Alignment Error Minima —16

Select a Representative Minimum —18

Solve for the Global Minimum Difference in the Alignment —20

Interpolate Data —22

FIG. 2